Europäisches Patentamt

**European Patent Office**

**Office européen des brevets**

(19)

(11) Veröffentlichungsnummer: **0 012 270**
**B1**

(12) **EUROPÄISCHE PATENTSCHRIFT**

(45) Veröffentlichungstag der Patentschrift:
20.01.82

(51) Int. Cl.³: **F 16 D 49/16,** F 16 D 66/00 //
**B66D5/08**

(21) Anmeldenummer: **79104732.7**

(22) Anmeldetag: **28.11.79**

(54) Backenbremse.

(30) Priorität: **14.12.78 CH 12754/78**

(43) Veröffentlichungstag der Anmeldung:
**25.06.80 Patentblatt 80/13**

(45) Bekanntmachung des Hinweises auf die Patenterteilung:
**20.01.82 Patentblatt 82/3**

(84) Benannte Vertragsstaaten:
**BE DE FR**

(56) Entgegenhaltungen:
**CH-A-374 413**
**CH-A-530 338**

(73) Patentinhaber: **INVENTIO AG, Seestrasse 55,**
**CH-6052 Hergiswil NW (CH)**

(72) Erfinder: **Keiser, Emil, Zentralstrasse 8, CH-6030 Ebikon (CH)**
Erfinder: **Tomse, Ljudevit, Dipl.Ing., Pilatusstrasse 3, CH-6036 Dierikon (CH)**
Erfinder: **Vertesy, Josef, Dipl.Ing., Brunnhalde 18, CH-6006 Luzern (CH)**

Backenbremse

Backenbremse, welche aus zwei schwenkbar gelagerten Bremshebeln mit je einer Bremsbacke und je einer Bremsfeder sowie einer Bremslüfteinrichtung besteht, wobei die Bremshebel an ihren schwenkbar gelagerten Enden unabhängig voneinander mit einem ortsfesten Bremsgehäuse verbunden sind und wobei eine Lastmesseinrichtung vorgesehen ist, die das von der Backenbremse aufgenommene Drehmoment in ein elektrisches Signal umwandelt.

In der CH-A- Nr. 374413 ist eine ähnliche, insbesondere für Aufzüge verwendete Backenbremse beschrieben, die durch Lastmessung und Erzeugung eines Gegendrehmomentes des Antriebsmotors entlastet wird, so dass der Aufzug nach dem Lüften ruckfrei anfahren kann. Bei der Lastmessung führt die Backenbremse eine Schwenkbewegung um den Mittelpunkt der Bremsscheibe aus. Zu diesem Zweck sind die Bremshebel an einem Balken gelagert, welcher an beiden Enden in kreisbogenförmigen Kulissen geführte Rollen trägt. In der Mitte des Balkens ist ein auf eine Lastmesseinrichtung einwirkender Betätigungsarm angeordnet. Die freien Enden des Bremshebels sind über Bremsfedern und eine Zugstange miteinander verbunden. Der Nachteil dieser Backenbremse liegt insbesondere darin, dass bei Bruch einer Bremsfeder beide Bremsbacken unwirksam werden. Weitere Nachteile ergeben sich aus der relativ aufwendigen Führung der Bremshebel in kreisbogenförmigen Kulissen und daraus, dass die Lastmesseinrichtung die volle zu messende Last aufnehmen und entsprechend ausgebildet sein muss.

Die der Erfindung zugrunde liegende Aufgabe besteht darin, zwecks Behebung vorstehender Nachteile eine Backenbremse zu schaffen, welche zwei unabhängig voneinander arbeitende Bremshebel aufweist und welche derart konzipiert ist, dass die Lastmesseinrichtung nicht die volle zu messende Last aufnehmen muss und für die Überwachung der Funktionsfähigkeit der einzelnen Bremshebel geeignet ist.

Zur Lösung dieser Aufgabe schlägt die Erfindung, wie sie im Anspruch 1 gekennzeichnet ist, vor, die Bremshebel auch an ihren von den Bremsfedern angetriebenen Enden unabhängig voneinander mit dem ortsfesten Bremsgehäuse zu verbinden und jedem Bremshebel eine Bremslüfteinrichtung zuzuordnen. Die Verbindung der Bremshebel mit dem Bremsgehäuse erfolgt an mindestens einem Ende über senkrecht zur Wirkungsrichtung der Bremsfeder federnde Glieder. Die Lastmesseinrichtung ist mit den federnden Gliedern verbunden, so dass der Einfederung entsprechende Signale erzeugbar sind.

Die Lastmesseinrichtung besteht vorzugsweise aus zwei Drosselspulen, wobei jedem Bremshebel eine Drosselspule zugeordnet ist und wobei das Drosseljoch jeweils am Lager des Bremshebels befestigt und der Drosselkern einstellbar am Bremsgehäuse angeordnet ist. Das Lager ist zwischen Tellerfedern angeordnet, welche die federnden Glieder bilden.

Die mit der Erfindung erzielten Vorteile bestehen insbesondere darin, dass bei Bruch einer Bremsfeder die zweite Bremsbacke weiterhin wirksam bleibt, so dass bei entsprechendem Anspressdruck die Last gehalten werden kann. Ein weiterer Vorteil liegt in der federnden, die Last aufnehmenden Lagerung der Bremshebel, wodurch die eigentliche Lastmesseinrichtung entlastet wird und klein und kostengünstig konzipiert werden kann. Weiterhin ist es von Vorteil, dass jedem Bremshebel eine Lastmessdrossel zugeordnet ist. Damit ergibt sich die Möglichkeit, durch Auswertung der bei der Lastmessung erzeugten elektrischen Signale zu erkennen, ob eine Bremsbacke ausgefallen ist.

Auf beiliegender Zeichnung ist ein Ausführungsbeispiel der Erfindung dargestellt, das im folgenden näher erläutert wird. Es zeigen:

Fig. 1 einen Aufriss der erfindungsgemässen Backenbremse,

Fig. 2 eine Seitenansicht der Backenbremse gemäss Fig. 1,

Fig. 3 einen Schnitt durch die Lagerung des Bremshebels in gegenüber den Fig. 1 und 2 vergrössertem Massstab und

Fig. 4 einen Schnitt durch das von der Bremsfeder angetriebene Ende des Bremshebels in gegenüber den Fig. 1 bis 3 vergrössertem Massstab.

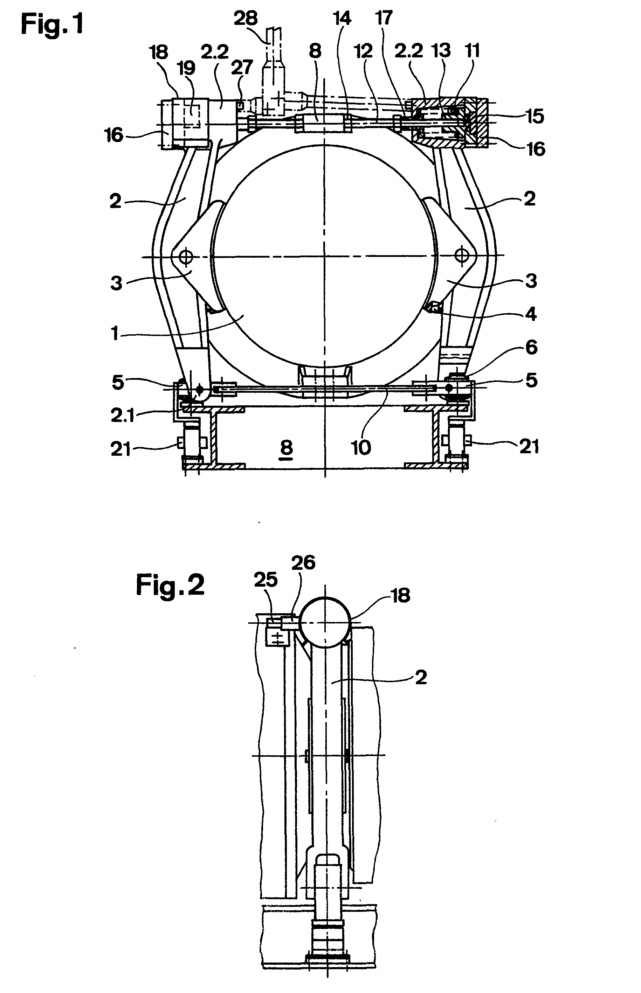

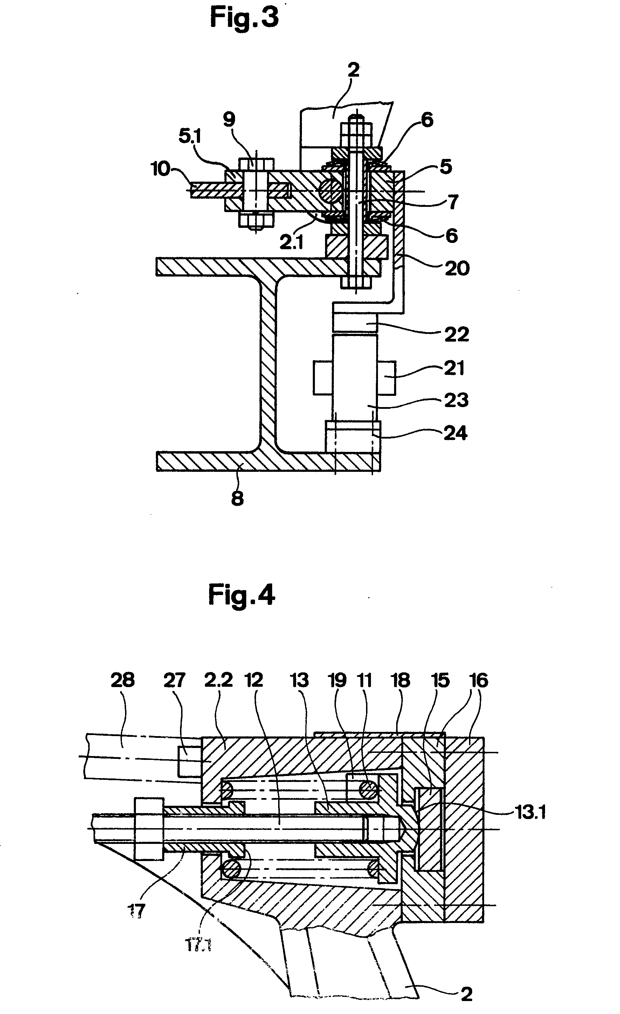

In den Figuren ist mit 1 eine drehfest mit dem Antrieb eines Aufzugs verbundene Bremsscheibe bezeichnet. An Bremshebeln 2 sind Bremsbacken 3 bewegbar angeordnet, wobei ein Gummipuffer 4 die Bremsbacke 3 bei gelüfteter Backenbremse abstützt, so dass ein gleichmässiger Luftspalt zwischen der Bremsbacke 3 und der Bremsscheibe 1 gewährleistet ist. Die Bremshebel 2 sind an einem Lager 5 schwenkbar gelagert, wobei das Lager 5 über federnde Glieder in Form von Tellerfedern 6 und einen Bolzen 7 mit einem Bremsgehäuse 8 verbunden ist (Fig. 1 und 3).

Das Lager 5 weist ein gabelförmig ausgebildetes Ende 5.1 auf, mittels welchem es über einen Gelenkbolzen 9 mit einer am Bremsgehäuse 8 befestigten Blattfeder 10 verbunden ist (Fig. 1 und 3). Vor dem Festschrauben des Gelenkbolzens 9 kann der Bremshebel 2 zwecks Anpassung der Bremsbacke 3 an die Bremsscheibe 1 um einen durch das Spiel zwischen Bolzen 7 und Lager 5 gegebenen Weg geschwenkt werden.

Das dem schwenkbar gelagerten Ende 2.1 gegenüberliegende Ende 2.2 des Bremshebels 2 ist über eine den Bremsdruck erzeugende Bremsfeder 11 und eine Zugstange 12 mit dem Bremsgehäuse 8 verbunden. Die Bremsfeder 11 stützt sich einerseits am Bremshebel 2 und andererseits an einer mit der Zugstange 12 verschraubten Druckmutter 13 ab. Mittels einer Mutter 14 ist die im Bremsgehäuse 8 eingeschraubte Zugstange 12 gesichert. Die Druckmutter 13 weist an der der Zugstange 12

2

abgewandten Seite eine halbkugelförmige Stirnfläche 13.1 auf, an welcher der Kolben 15 eines als Bremslüfteinrichtung dienenden, mit dem Bremshebel 2 fest verbundenen Hydraulikzylinders 16 anliegt. Bei Zuführung des Druckmittels durch einen weiter nicht dargestellten Druckschlauch wird der Lüfthub der Backenbremse durch die Schulter 17.1 einer mit der Zugstange 12 verschraubten Gewindehülse 17 begrenzt (Fig. 1 und 4).

Mit 18 ist eine Abdeckung bezeichnet, welche eine die Nachstellung der Druckmutter 13 bei Abnutzung des Bremsbelages ermöglichende Öffnung 19 im Bremshebel 2 abdeckt (Fig. 1, 2 und 4). Am Lager 5 ist mittels eines Trägers 20 das Joch 22 einer als Lastmesseinrichtung dienenden Drosselspule 21 befestigt. Der Kern 23 der Drosselspule 21 ist über Schrauben 24 einstellbar im Bremsgehäuse 8 angeordnet (Fig. 1 und 3). Ein am Bremsgehäuse 8 befestigter Mikroschalter 25 wird beim Lüften der Backenbremse durch einen am Bremshebel 2 angeordneten Betätigungsarm 26 betätigt (Fig. 2). Mit 27 sind an den Bremshebeln 2 vorgesehene Zapfen bezeichnet, welche der Aufnahme eines Handlüfthebels 28 dienen (Fig. 1 und 4).

Die vorstehend beschriebene Backenbremse arbeitet wie folgt: Wenn kein Drehmoment an der Bremsscheibe 1 vorhanden ist, sind die beiden Luftspalte zwischen Joch 22 und Kern 23 der Drosselspulen 21 gleich gross. Sobald bei in Bremsstellung befindlichen Bremshebeln 2 ein Drehmoment auftritt, bewegen sich die Bremshebel 2 gegenläufig zueinander annähernd in ihrer Längsrichtung. Dabei wird ein Luftspalt vergrössert und der andere verkleinert. Mittels der dadurch erzeugten Spannungsdifferenz der beiden Drosselspulen 21 wird auf weiter nicht erläuterte Weise der Antriebsmotor derart gesteuert, dass er ein die Backenbremse entlastendes, den Aufzug elektrisch im Stillstand haltendes Gegendrehmoment erzeugt, wodurch bei Eintreffen eines Fahrbefehls ein ruckfreies Anfahren des Aufzugs ermöglicht wird.

Beim Lüften der Backenbremse erzeugt ein nicht weiter dargestelltes Hydraulikaggregat einen konstanten Öldruck, unter dessen Wirkung der Kolben 15 gegen die Druckmutter 13 gedrückt wird. Dabei wird der Hydraulikzylinder 16 mit dem Bremshebel 12 und der Bremsbacke 3 gegen die Kraft der Bremsfeder 11 von der Bremsscheibe 1 abgezogen. Im Moment des Abhebens der Bremsbacke 3 werden die Mikroschalter 25 betätigt, wodurch der Lastmessvorgang abgeschlossen und die Fahrt freigegeben wird.

Als federndes Glied kann auch die als Rundstabfeder ausgebildete Zugstange 12 dienen, wobei der Bremshebel 2 an seinem angetriebenen Ende spielfrei verschiebbar auf der Zugstange 12 geführt ist und an seinem schwenkbar gelagerten Ende senkrecht zur Wirkungsrichtung der Bremsfeder 11 am Bremsgehäuse 8 verschiebbar angeordnet ist. Es ist auch möglich, den Bremshebel 2 an beiden Enden über federnde Glieder, beispielsweise Rundstabfedern, mit dem Bremsgehäuse 8 zu verbinden.

**Patentansprüche**

1. Backenbremse, welche aus zwei schwenkbar gelagerten Bremshebeln (2) mit je einer Bremsbacke (3) und je einer Bremsfeder (11) sowie einer Bremslüfteinrichtung (15, 16) besteht, wobei die Bremshebel (2) an ihren schwenkbar gelagerten Enden (2.1) unabhängig voneinander mit einem ortsfesten Bremsgehäuse (8) verbunden sind und wobei eine Lastmesseinrichtung (21) vorgesehen ist, die das von der Backenbremse aufgenommene Drehmoment in ein elektrisches Signal umwandelt, dadurch gekennzeichnet, dass die Bremshebel (2), wie an sich bekannt, auch an ihren von den Bremsfedern (11) angetriebenen Enden (2.2) unabhängig voneinander mit dem ortsfesten Bremsgehäuse (8) verbunden sind und jedem Bremshebel (2) eine Bremslüfteinrichtung (15, 16) zugeordnet ist, wobei die Verbindung der Bremshebel (2) mit dem Bremsgehäuse (8) an mindestens einem Ende (2.1, 2.2) über senkrecht zur Wirkungsrichtung der Bremsfeder (11) federnde Glieder (6, 10) erfolgt, und wobei die Lastmesseinrichtung (21) mit den federnden Gliedern (6, 10) verbunden ist, so dass der Einfederung entsprechende elektrische Signale erzeugbar sind.

2. Backenbremse nach Patentanspruch 1, dadurch gekennzeichnet, dass das federnde Glied eine fest mit dem Bremsgehäuse (8) verbundene Blattfeder (10) ist, an derem freien Ende der Bremshebel (2) schwenkbar gelagert ist.

3. Backenbremse nach Patentanspruch 1 oder 2, dadurch gekennzeichnet, dass die federnden Glieder Tellerfedern (6) sind, wobei der Bremshebel (2) schwenkbar an einem Lager (5) gelagert ist, welches zwischen den Tellerfedern (6) angeordnet ist.

4. Backenbremse nach den Patentansprüchen 1 bis 3, dadurch gekennzeichnet, dass die Blattfeder (10) und die Tellerfedern (6) am schwenkbar gelagerten Ende (2.1) des Bremshebels (2) angeordnet sind, wobei das zwischen den Tellerfedern (6) angeordnete Lager (5) mittels eines Gelenkbolzens (9) mit der Blattfeder (10) verbunden ist.

5. Backenbremse nach Patentanspruch 3 oder 4, dadurch gekennzeichnet, dass die Lastmesseinrichtung aus zwei Drosselspulen (21) besteht, wobei jedem Bremshebel (2) eine Drosselspule (21) zugeordnet ist und wobei das Drosseljoch (22) am Lager (5) des Bremshebels (2) befestigt ist und der Drosselkern (23) einstellbar am Bremsgehäuse (8) angeordnet ist.

6. Backenbremse nach einem der Patentansprüche 1 bis 5, dadurch gekennzeichnet, dass die sich einerseits am Bremshebel (2) abstützende Bremsfeder (11) andererseits an einer Druckmutter (13) anliegt, welche einstellbar auf einer mit dem Bremsgehäuse (8) fest verbundenen Zugstange (12) angeordnet ist, wobei die Druckmutter (13) an der der Zugstange (12) abgewandten Seite eine halbkugelförmige Stirnfläche (13.1) aufweist, an welcher der Kolben (15) eines als Bremslüfteinrichtung dienenden, mit dem Bremshebel (2) fest verbundenen Hydraulikzylinders (16) anliegt.

7. Backenbremse nach einem der Patentansprüche 1 bis 6, dadurch gekennzeichnet, dass an den Bremshebeln (2) Zapfen (27) zur Aufnahme eines Handlüfthebels (28) vorgesehen sind.


**Claims**

1. Shoe brake arrangement, consisting of two pivotably mounted brake levers (2), each comprising a brake shoe (3) and a brake spring (11), and of a brake release device (15, 16), whereby the brake levers (2) at their pivotably mounted ends (2.1) are connected independently one from the other with a stationary brake housing (8) and whereby a load measuring device (21) is provided, converting the torque, absorbed by the shoe brake arrangement, into an electrical signal, charracterized thereby, that the brake levers (2), as is commonly known, at their ends (2.2) activated by the brake springs (11), are connected with the stationary housing (8) one independent from the other, and that to each brake lever (2) there is associated a brake release device (15, 16), whereby the connection of the brake levers (2) with the brake housing (8) is achieved, at least at one end (2.1, 2.2), with resilient elements (6, 10) having a resilient action directed essentially perpendicular to the line of action of the related brake spring (11), and whereby the load measuring device (21) is connected with the resilient elements (6, 10) so that electrical signals, corresponding to the resilient movement, are generated.

2. Shoe brake arrangement as defined in claim 1, characterized thereby, that the resilient element is a leaf spring (10) fixedly connected with the brake housing (8) and said leaf spring having a free end at which there is pivotably mounted the brake lever (2).

3. Shoe brake arrangement as defined in claim 1 or 2, characterized thereby, that the resilient elements are plate springs (6), whereby the brake lever (2) is pivotably mounted in a bearing means (5) which is arranged between the plate springs (6).

4. Shoe brake arrangement as defined in claims 1 to 3, characterized thereby, that the leaf spring (10) and the plate springs (6) are arranged at the pivotably mounted end (2.1) of the brake lever (2), whereby the bearing means (5) arranged between the plate springs (6) is connected with the leaf spring (10) by means of a joint bolt (9).

5. Shoe brake arrangement as defined in claim 3 or 4, characterized thereby, that the load measuring device consists of two choke coils (21), whereby each brake lever (2) having operatively associated therewith one of the choke coils (21) and whereby the choke yoke (22) is attached to the bearing means (5) of the brake lever (2) and the core (23) of the choke coil is adjustably arranged at the brake housing (8).

6. Shoe brake arrangement as defined in any one of the claims 1 to 5, characterized thereby, that the brake spring (11), bearing at one end at the brake lever (2), rests at the other end against a pressure nut (13), which is adjustably arranged at a traction rod (12) fixedly connected with the brake housing (8), whereby the pressure nut (13) is provided, at the side facing away from the traction rod (12), with a semispherical end face (13.1) at which the piston (15) is bearing against it, said piston (15) belonging to a hydraulic cylinder (16) which is fixedly connected with the brake lever (2) and serves as a brake release device.

7. Shoe brake arrangement as defined in any one of the claims 1 to 6, characterized thereby, that at each of the brake levers (2) pins (27) are provided for receiving a manual brake release lever (28).


**Revendications**

1. Frein à mâchoires, qui comporte deux leviers de frein (2) montés pivotants, pourvus chacun d'une mâchoire de frein (3) et d'un ressort de frein (11), ainsi qu'une installation d'ouverture de frein (15, 16), et dans lequel, à leur extrémité montée pivotante (2.1), les leviers de frein (2) sont reliés indépendamment l'un de l'autre à un boîtier de frein stationnaire (8), une installation de mesure de charge (21) étant prévue pour convertir le couple absorbé par le frein en un signal électrique, caractérisé en ce qu'à leur extrémité (2.2) actionnée par le ressort de frein (11), les leviers de frein (2) sont, comme connu en soi, également reliés indépendamment l'un de l'autre au boîtier de frein stationnaire (8) et qu'à chaque levier de frein (2) est associée une installation d'ouverture de frein (15, 16), et en ce que la liaison entre les leviers de frein (2) et le boîtier de frein stationnaire (8) s'effectue, à au moins une extrémité (2.1, 2.2), par l'intermédiaire d'éléments (6, 10) agissant élastiquement perpendiculairement à la direction d'action du ressort de frein (11) concerné, l'installation de mesure de charge (21) étant reliée aux éléments (6, 10) à action élastique, de sorte que des signaux électriques correspondant au déplacement élastique peuvent être engendrés.

2. Frein à mâchoires selon la revendication 1, caractérisé en ce que l'élément à action élastique est un ressort-lame (10) qui est relié fixe au boîtier de frein (8) et présente une extrémité libre à laquelle est monté pivotant le levier de frein (2).

3. Frein à mâchoires selon l'une des revendications 1 ou 2, caractérisé en ce que les éléments à action élastique sont des ressorts-disques (6), le levier de frein (2) étant monté pivotant dans un palier (5) disposé entre les ressorts-disques (6).

4. Frein à mâchoires selon les revendications 1 à 3, caractérisé en ce que le ressort-lame (10) et les ressorts-disques (6) sont disposés à l'extrémité montée pivotante (2.1) du levier de frein (2), le palier (5) disposé entre les ressorts-disques (6) étant relié au ressort-lame (10) au moyen d'un boulon d'articulation (9).

5. Frein à mâchoires selon l'une des revendications 3 ou 4, caractérisé en ce que l'installation de mesure de charge est constituée de deux bobines d'induction (21), et qu'à chaque levier de frein (2) est associée une des bobines (21) dont la culasse (22) est reliée fixe au palier (5), alors que le noyau (23) est disposé réglable au boîtier de frein (8).

6. Frein à mâchoires selon l'une des revendications 1 à 5, caractérisé en ce que le ressort de frein (11) qui, d'un côté, prend appui sur le levier de frein (2) s'appuie, du côté opposé, à un écrou de pression (13) monté réglable sur une tige de traction (12) reliée fixe au boîtier de frein (8), l'écrou de pression (13) présentant, à son côté tourné à l'opposé de la tige de traction (12), une face frontale hémisphérique (13.1) contre laquelle s'applique le piston (15) d'un cylindre hydraulique (16) qui est relié au boîtier de frein (8) et sert d'installation d'ouverture de frein.

7. Frein à mâchoires selon l'une des revendications 1 à 6, caractérisé en ce qu'aux deux leviers de frein (2) sont prévus des tenons (27) pour la réception d'un levier à main (28) d'ouverture de frein.

**Fig. 1**

**Fig. 2**

# Fig. 3

# Fig. 4